# EUROPEAN PATENT APPLICATION

(11) **EP 0 893 913 A1**
(43) Date of publication of application: **27.01.1999**
(21) Application number: 97401792.3
(22) Date of filing: 24.07.1997
(51) Int. Cl.: H04N 5/00

(54) **Digital transport stream processing**

(71) Applicant: CANAL+ Société Anonyme, 75711 Paris Cedex 15 (FR)
(72) Inventor: Sarfati, Jean-Claude, 93800 Epinay Sur Seine (FR); Meric, Jerome, 60300 Senlis (FR)
(74) Representative: Cozens, Paul Dennis

(57) **Abstract**

A device for use in a receiver/decoder for a broadcast digital television system in which received signals are passed through a receiver to the receiver/decoder and thence to a television set. The receiver/decoder decodes a compressed MPEG-type signal, and is controlled by a remote controller handset, through an interface in the receiver/decoder. The receiver/decoder includes a plurality of interfaces to external units, and logical driver devices for the interfaces. The device produces a partial transport stream or an encapsulated data stream from the received broadcast digital data stream under the control of an application. This may allow a desired data stream, for example containing selected programmes to be recorded by a digital video recorder coupled to receive the output of the device or may facilitate communication with a computer.

## Description

The present invention relates to interfacing of application programs to physical devices, particularly but not exclusively in the context of receiver/decoders for digital television systems.

The advent of digital transmission systems intended primarily for broadcasting television signals, in particular but not exclusively satellite television systems, has opened up the possibility of using such systems for other purposes. One of these is to provide interactivity with the end user.

The present invention finds specific application in a broadcast digital television system in which received signals are passed through a receiver to a receiver/decoder and thence to a television set. The receiver/decoder (also known as a set-top-box or STB) decodes a compressed MPEG-type signal into a television signal for the television set. It is controlled by a remote controller handset, through an interface in the receiver/decoder.

One way of providing the interactivity described above is to run an application on the receiver/decoder through which the television signal is received. It is desirable to enable a variety of applications to communicate with a variety of physical devices in a transparent manner. Our co-pending applications PCT/EP97/02115 and PCT/EP97/02116 describe systems in which one or more applications can be downloaded by a set-top-box (STB) and communicate with physical devices in the STB such as parallel and serial interfaces and smartcard readers by means of a device driver for each device and an overall device manager.

Pursuant to the present invention, it has been proposed to provide the capability for a set-top-box to provide a digital output stream from a received data stream, for example to enable digital storage of received programmes and data, for example using a digital video recorder, or to facilitate data communication with other devices, for example over a TCP/IP network.

A problem with providing such a digital output stream is that the received data stream generally contains MPEG data at a very high bit rate, and it would be impractical to store the complete received data stream. In addition, the received data stream may contain much information which is not of interest to the viewer. A receiver decoder contains apparatus for demultiplexing and if necessary descrambling a portion of the received data stream to provide a single channel for analogue display which can be recorded via a conventional analogue video recorder. However, the conventional apparatus lacks flexibility and cannot provide a data stream suited for digital storage.

Aspects of the invention propose novel techniques for providing a digital data stream suited to storage on a digital video recorder. Although the invention offers most advantages in processing an MPEG data stream containing a number of television programmes and other data received by a receiver/decoder (for cable or more preferably satellite) to produce an output stream suitable for transmission to a digital video recorder, it has been appreciated by the inventors that the invention can be applied to processing of other data streams, and can provide real-time editing of digital video.

In a first aspect, the invention provides apparatus for processing a digital data stream comprising:
means for receiving a digital data stream comprising a plurality of packets of information;
means for storing a list of specified packets to be selected from the received digital data stream;
means for extracting packets specified in said list from the received data stream; and
means for combining the extracted packets to produce an output data stream.

Thus, with this aspect of the invention, specified packets can be extracted directly from the received data stream (which may also be termed the original transport stream) and selected portions, for example corresponding to one or more programmes of interest, extracted and compiled into the output data stream (which may also be termed a partial transport stream). It will be appreciated that the apparatus offers considerable flexibility as it may be employed simply to copy an original transport stream containing data for several channels unchanged, or to select an individual packet of data.

In a second aspect, the invention provides apparatus for processing a digital data stream comprising:
means for receiving a digital data stream comprising a plurality of packets of information;
means for storing a list of specified sections to be selected from the received digital data stream;
means for extracting sections specified in said list from the received data stream; and
means for processing the extracted sections to produce an output data stream.

The means for processing the extracted sections can preferably perform one of a number of operations to encapsulate or package received MPEG sections in a suitable format. In a simple embodiment, processing the extracted sections may simply comprise stripping MPEG header information or other data from the sections, for example by deleting portions of the segments, preferably at the beginning or the end, to extract the "raw" data for onward transmission. In such a case, addition of communication protocol specific headers and the like must be performed at the sending end, by sending, for example, ready-prepared TCP/IP packets.

Preferably, the means for processing the extracted sections includes means for adding at least one of a header and a footer, and preferably both, to a received section to provide a data stream conforming to a communication protocol other than the communication protocol of the received data stream. The section processing means may include means for adding a frame check sequence to the data. Inclusion of such features may reduce the amount of processing required at the transmitter, as well as reducing the amount of data that must be transmitted. In addition, the communication protocol can be changed at the receiver/decoder.

In each case, the received digital data stream is preferably an MPEG data stream (by which is meant any variant, modification or development of the basic MPEG format, preferably an MPEG-2 data stream) comprising a series of packets having respective packet identifiers (also termed PIDs).

Particularly (but not exclusively) in the case of the first aspect, the list preferably comprises a list of packet identifiers to be selected from the received data stream.

The list preferably also contains priority information indicating priority assigned to each packet, the apparatus being arranged to include packets with higher priority in the output stream in preference to packets with lower priority in the event of the number of packets to be combined becoming too great for the data handling capacity of the output stream. In this way, less important information, for example associated with a programme of lesser interest can be discarded leading to a deterioration in quality of that programme whilst another programme is more reliably recorded.

Particularly (but not exclusively) in the case of the second aspect, the list preferably comprises a list of sections, each section being identified according to a numeric value in a specified field in the section. The section is preferably specified by defining a field of a first predetermined number of bits at an offset of a second predetermined number of bits from an identified point, preferably the start, in the section.

The apparatus may include means for logging the identifiers of sections received. The logging means may comprise means for defining a bitmap, each bit in the bitmap corresponding to a section received or expected to be received, and means for altering the state of the bit corresponding to a received section to signify reception of that section.

The apparatus preferably includes means for storing at least one further list of packet identifiers and applying one or more specified processing operations, for example descrambling, to packets specified in the or each further list prior to inclusion in the output data stream. This allows, for example, a scrambled programme to be descrambled and stored in descrambled form.

The apparatus preferably also includes means for inserting further data, for example packets or sections, into the output data stream. The apparatus is preferably arranged to receive the further data from an application. This enables other information, for example information identifying the programmes included in the output data stream, to be stored, or enables other data generated by an application receiving the original transport stream to be stored.

The apparatus is most preferably implemented as a device in a receiver/decoder, for example for a digital satellite system as described in our co-pending applications PCT/EP97/02106 - 02117. In such an implementation, the device can operate under the control of an application, via a device manager, providing a convenient and flexible arrangement for controlling the composition of the output data stream. The device is preferably arranged to communicate with the digital video recorder using a high-speed digital interface, such as the IEEE 1394 interface, using a suitable device driver, such as the one described in our application filed concurrently herewith and bearing the attorney reference PDC/IK/19829, but can be used with any suitable digital interface.

The second aspect in particular may be arranged to provide a virtual TCP/IP connection to a computer, by receiving broadcast MPEG packets and encapsulating the packets to provide a TCP/IP data stream to the computer. In such a case, communication may be via a serial or parallel port, preferably an enhanced or bidirectional parallel port.

In a third aspect, the invention provides a device for operating under the control of an application to process a received digital data stream to produce an output stream therefrom, the device comprising:
means for receiving a digital data stream comprising a plurality of packets of information;
means for receiving from an application information for compiling a list of specified packets or sections to be selected from the received digital data stream;
means for extracting packets or sections specified in said list from the received data stream; and
means for combining the extracted packets or encapsulating the extracted sections to produce said output data stream.

The device preferably operates in one of two modes, an idle mode in which no output stream is being produced and a running mode in which data is passing through the device. Although production of the output stream could be stopped simply by specifying no packets for inclusion, provision of an idle mode may allow a more efficient use of system resources. The device preferably also includes means for receiving commands from an application for starting and stopping output stream generation (for switching between modes).

Preferably, in said idle mode, the device is arranged to receive information for compiling said list in the form of an initial list of all packet identifiers to be copied to the output stream. This allows the initial list to be set efficiently. Thereafter, in running mode, the device is preferably arranged to receive a list of packet identifiers to be added to or deleted from the current list. In this way, to update the list, it is not necessary to handle increasingly long lists and to keep track of all previous packet identifiers; this is particularly advantageous as running mode processing may be more time-critical than idle mode processing.

In a similar manner to the initial storing of lists of packets to be copied in idle mode, and the adding and deleting of entries in running mode, the device is preferably arranged to maintain a further list of packets to be descrambled, preferably by descrambling means of the receiver/decoder used to descramble programmes for display. In addition, the device may be arranged to receive information for use in descrambling from an application, preferably as part of a procedure for setting the initial list of packets to be descrambled.

In addition to storing lists of packets to be copied directly, the device preferably also includes, in a similar manner, means for storing a list of MPEG sections from the received data bitstream to be inserted in the output bitstream.

The device preferably further includes means for storing a list of MPEG sections to be inserted by an application. Preferably, the device is arranged to receive parameters from an application for controlling repetition of the section in the output stream and the device is arranged to repeat the section based on the parameters. This allows production of complicated data streams with relatively little input from an application. For example, an application can send a simple command to insert a section identifying the programmes included in the output stream, and this can automatically be inserted at regular intervals into the output stream by the device.

The device preferably includes means for returning to an application information concerning the currently selected packet identifiers or sections included in the output stream.

Functions of the device may be implemented in hardware, for example in a dedicated integrated circuit; this may provide enhanced speed of operation. Preferably, however, at least some of the device driver is implemented in software, preferably run by processing means which runs the application; this allows greater flexibility, requires less components, and allows the device driver to be updated more readily.

In a fourth aspect, the invention provides a data processing system comprising:
run-time engine means for running at least one application;
means for receiving a broadcast digital data stream;
a device, preferably as defined above, for processing the received digital data stream under the control of the or each application;
means for supplying the data stream output by the device to an output interface.

Preferred features of the first and second aspects may be applied to the third and fourth aspects.

The data processing system is preferably implemented in a receiver/decoder (for example a set-top-box) which includes means for receiving the broadcast digital data stream from a satellite receiver or cable, the interface being arranged for connection to a digital video recorder (which term is meant to include any suitably configured digital storage device capable of storing data for a television program, regardless of the physical medium in which the data is actually stored) or digital display device or computer for display or storage of at least a portion of the received data. The device is preferably arranged to cooperate with a device driver for outputting the output data stream to a high-speed (100Kbit/s upwards, preferably at least 1Mbit/s, 10Mbit/s or higher) digital interface.

The interface preferably conforms to the IEEE 1394 standard or a variant or modification thereof.

Where the system is implemented in a receiver/decoder arranged for connection to a digital video recorder, the receiver/decoder preferably includes an application arranged to control the device to select portions (packets or sections) of the received data stream comprising two or more television programmes for outputting to the digital video recorder and preferably including means for adding information to the output data stream identifying the programmes. In this way, a user may select two or more programmes for recording, for viewing at a later time; this would conventionally require two or more analogue video recorders and two or more receiver/decoders. The application may include means for controlling the video recorder, for example as described in our co-pending application bearing the attorney reference PDC/IK/19931 filed herewith, the disclosure of which is herein incorporated by reference.

This feature may be provided independently, in a fifth aspect, in which the invention provides an application for a receiver/decoder having means for receiving a broadcast digital data stream, an interface for connection to a digital storage medium, and a device for processing the received digital data stream to produce an output data stream for supply to the digital storage medium, the application comprising means for controlling said device to select portions of the received digital data stream corresponding to two or more broadcast programmes and for outputting the portions to the digital storage medium for storage in a form enabling the programmes to be played back subsequently.

The application is preferably run in an interpreted language and the device driver is preferably compiled.

Embodiments incorporating preferred features of the present invention will now be described, purely by way of example, with reference to the accompanying drawings, in which:-
Figure 1 is a schematic diagram of interfaces of the receiver/decoder;
Figure 2 is a functional block diagram of the receiver/decoder;
Figure 3 shows certain components of the virtual machine and run time engine in more detail;
Figure 4 shows a schematic overview of the functions provided by a first device embodying the invention;
Figure 5 is a schematic diagram for explaining the insertion of repeated sections into the output data stream;
Figure 6 is a schematic overview of the functions provided by a second device embodying the invention;
Figure 7 is a schematic diagram of a datagram produced by the embodiment of Fig. 6.

### RECEIVER/DECODER BASICS

To assist in understanding of the device, the preferred platform on which the device operates, our digital satellite receiver/decoder will first be described briefly.

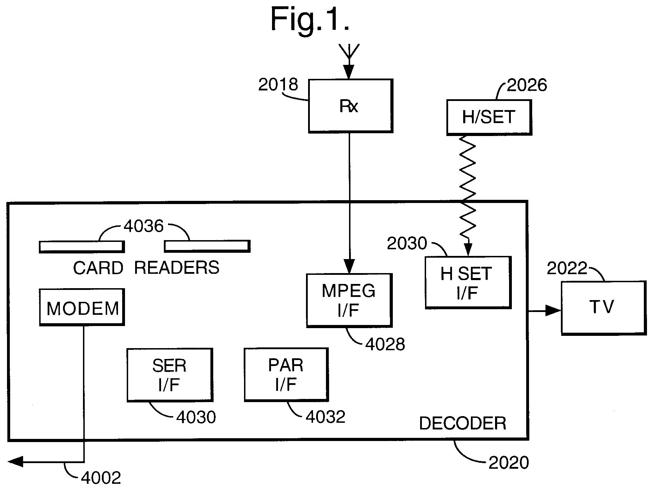

Referring to Fig. 1, a receiver/decoder 2020 or set-top-box for use in a digital interactive television system in which the device driver of the embodiment is intended to be installed is schematically depicted. Details of a suitable digital interactive television system may be found in our co-pending applications PCT/EP97/02106 - 02117 to which reference should be made, and the disclosures of which are herein incorporated by reference. For ease of reference, parts described in more detail in the aforementioned specifications are generally designated by the reference numerals used in those specifications.
As described in more detail in the aforementioned specifications, referring to Figure 1, the receiver/decoder 2020 includes several interfaces; specifically, a tuner 4028 for the MPEG signal flow, a serial interface 4030, a parallel interface 4032, and two card readers 4036, one for a smartcard forming part of the system and one for bank cards (used for making payments, home banking, etc) or another smart card. The receiver/decoder also includes an interface 4034 to a modemmed back channel 4002 to the television signal producer, so that the user can indicate preferences, etc back to the television signal (programme) producer. The receiver also comprises a Run-Time-Engine 4008, a Device Manager 4068 and a plurality of Devices 4062 for running one or more applications 4056.

For the purposes of this specification, an application is a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Some examples of applications, described in more detail in the aforementioned applications are:-
- An Initiating Application which is an adaptable collection of modules enabling the receiver/decoder 2020 to be immediately operative in the MPEG-2 environment.
- A Startup Application which allows any application, either downloaded or resident, to run on the receiver/decoder 2020.
- A Program Guide which is an interactive application which gives full information about programming.
- A Pay Per View application which is an interactive service available on each PPV channel of the digital TV bouquet to enable the end user to buy the current event.
- A PC Download application enabling an end user to download computer software using the PC download application.
- A Magazine Browser application comprising a cyclic video broadcast of images with end user navigation via on-screen buttons.
- A Teleshopping application enabling offers of goods for sale to be transmitted to the receiver/decoder 2020 and displayed on the television 2022 and enabling the user to select a particular item to buy.

Applications are stored in memory locations in the receiver/decoder 2020 and represented as resource files. The resource files comprise graphic object description unit files, variables block unit files, instruction sequence files, application files and data files, as described in more detail in the above mentioned specifications.

In the MPEG data stream, each module comprises a group of MPEG tables. Each MPEG table may be formatted as a number of sections. In the MPEG data stream, each section has a "size" of up to 4 kbytes. For data transfer via the serial and parallel port, for example, modules similarly are split into tables and sections, the size of the section varying with the transport medium.

Modules are transported in the MPEG data stream in the form of data packets of typically 188 bytes within respective types of data stream, for example, video data streams, audio data streams and teletext data streams. Each packet is preceded by a Packet Identifier (PID) of 13 bits, one PID for every packet transported in the MPEG data stream. A programme map table (PMT table) contains a list of the different data streams and defines the contents of each data stream according to the respective PID. A PID may alert a device to the presence of applications in the data stream, the PID being identified using the PMT table.

The decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The system can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061. The receiver/decoder hardware can be regarded as including the various ports or interfaces as discussed above (the interface 2030 for the handset 2026, the MPEG stream interface 4028, the serial interface 4030, the parallel interface 4032, the interfaces to the card readers 4036, and the interface 4034 to the modemmed back channel 4002).

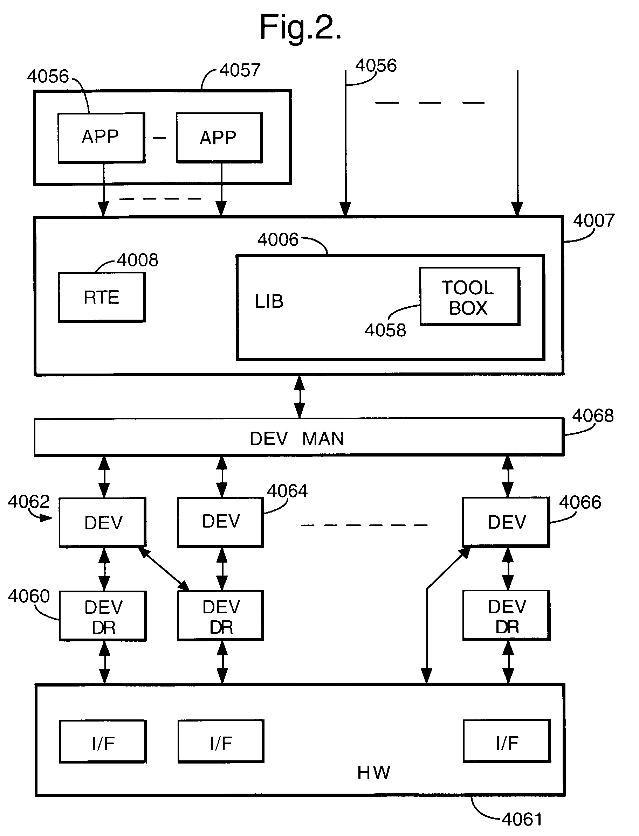

With reference to Figure 2, various applications 4057 are coupled to the unit 4007; some of the more commonly used applications may be more or less permanently resident in the system, as indicated at 4057, while others will be downloaded into the system, eg from the MPEG data stream or from other ports as required.

The unit 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware 4060 in the receiver/decoder 2020, such as hardware and software version numbers and available RAM space, and a function used when downloading a new device 4062. Functions can be downloaded into the library, being stored in Flash or RAM memory.

The run time engine 4008 is coupled to a device manager 4068 which is coupled to a set of devices 4064 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

As will be described below, there are 3 forms of communication from the devices 4064 up to the run time engine: by means of variables, buffers, and events which are passed to a set of event queues.

Each function of the receiver/decoder 2020 is represented as a device 4062. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

When a new device 4062 is created, it can be installed in existing receiver/decoders 2020 by downloading the relevant application 4056 from the broadcast centre. This downloading is performed in the receiver/decoder 2020 by an application 4056 which checks the hardware and software versions and, if correct, loads the software module representing the new device 4062 and asks a procedure of the library 4006 to install the new device code within the firmware (in Flash memory). This can provide a flexible and secure installation of new functions within the receiver/decoder 2020 without affecting the rest of the software.

The device manager 4068 is a common software interface between the application 4056 and the specific functions of the receiver/decoder 2020. The device manager 4068 controls access to devices 4062, declares receipt of an unexpected event, and manages shared memory.

The run time engine 4008 runs under the control of the microprocessor and a common application programming interface. They are installed in every receiver/decoder 2020 so that all receiver/decoders 2020 are identical from the application point of view.

The engine 4008 runs applications 4056 on the receiver/decoder 2020. It executes interactive applications 4056 and receives events from outside the receiver/decoder 2020, displays graphics and text, calls devices for services and uses functions of the library 4006 connected to the engine 4008 for specific computation.

The run time engine 4008 is an executable code installed in each receiver/decoder 2020, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory 2028. Only the necessary code is loaded into the RAM or Flash memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG-2 transport stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4066 or the device manager 4068. The manager gives the client a client number which is referred to in all accesses to the device. A device 4066 can have several clients, the number of clients for each device 4066 being specified depending on the type of device 4066. A client is introduced to the device 4066 by a procedure "Device: Open Channel". This procedure assigns a client number to the client. A client can be taken out of the device manager 4068 client list by a procedure "Device: Close Channel".

The access to devices 4062 provided by the device manager 4068 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

As noted above, the main loop of the run time engine is coupled to a variety of process sequencer units, and when the main loop encounters an appropriate event, control is temporarily transferred to one of the process sequencer units.

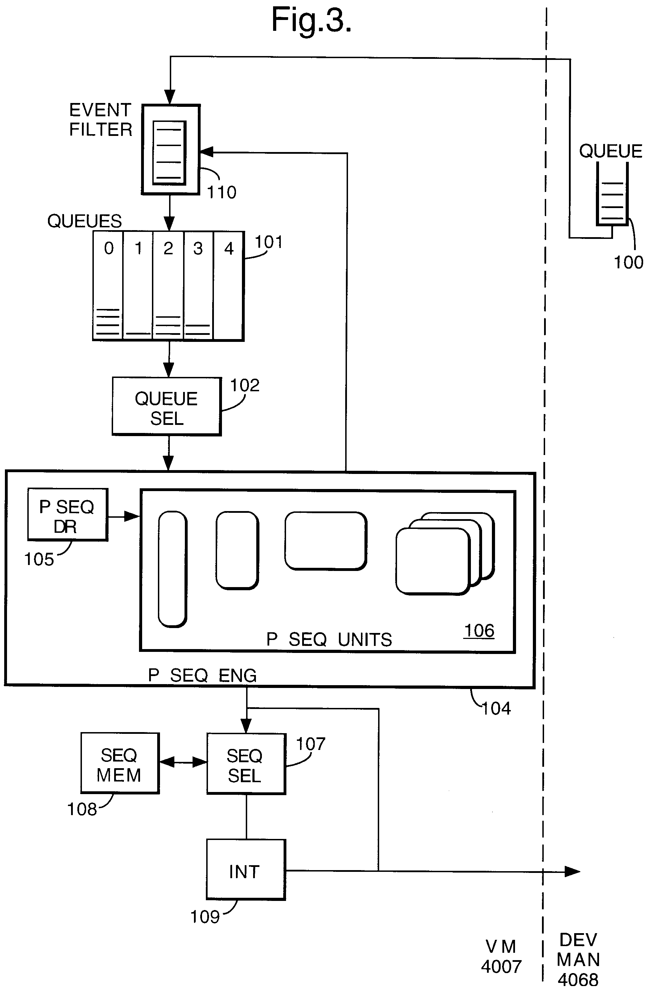

Referring to Fig. 3, the device manager includes a queue 100 into which events from the devices are passed for temporary storage. At suitable intervals, the virtual machine sends a signal to this queue to extract the first item from it. This event item is moved to a queue structure 101 in the virtual machine. Depending on the priority level of the event item, it is inserted into the appropriate one of the 5 queues 0 to 4. Event items are extracted from the queue structure 101 by a queue selector unit 102 under the control of the run time engine.

When an event is selected from the queue structure 101, it is passed to a process sequencer unit engine 104, which consists of a process sequencer unit driver 105 and a set of process sequencer units 106. Each process sequencer unit is a set of action-groups linked together, so that each step from one action-group to the next action-group is, in general, dependent on the current action-group and the nature of the event. Different process sequencer units have different sizes and complexities, including one in which the "next" action-group, ie the action-group to which the system steps on in response to an event, is dependent solely on the nature of the event but is independent of the current action-group. Also, as is shown at the right-hand side of the process sequencer units block, there may be several copies of a process sequencer unit, ie several identical process sequencer units, to deal eg with several separate data streams using identical protocols through a single port.

When an event is selected, it is passed to the appropriate process sequencer unit. This selects the appropriate outlet from the current action-group on the process sequencer unit. This results in the appropriate next action-group being selected and the actions in that action-group being performed, involving eg the sending of a message to the device manager or the execution of a instruction sequence. Action-groups in the process sequencer unit can also send event messages to other process sequencer units.

If a instruction sequence is selected, the identification of the instruction sequence is sent to a instruction sequence selector 107. This obtains the desired instruction sequence from a instruction sequence memory 108 and passes it to a instruction sequence interpreter 109, which executes the instruction sequence.

The system also includes a filter 110, which is loaded with event types eg from the process sequencer units 106. When an event item is passed from the queue 100 in the device manager to the queue structure 101 in the virtual machine, its type or character is matched against the list in the filter 110, and if it is of a type which is not recognized, it is rejected. This ensures that if say the device manager or the keyboard generates events of a type which the virtual machine cannot deal with, those events are not passed to the queue structure 101. (If events of this kind were passed to the queue structure 101, either they would accumulate in that queue structure or they might cause malfunctioning of the process sequencer unit engine 104.)

Thus, it can be seen that our basic system provides a platform having considerable flexibility in enabling an application to communicate with a variety of devices.

### SIGNAL PROCESSING DEVICES

Two signal processing devices which embody the invention will be described; the two devices may both be provided simultaneously in the same receiver/decoder, each device being tailored to provide slightly different functions.

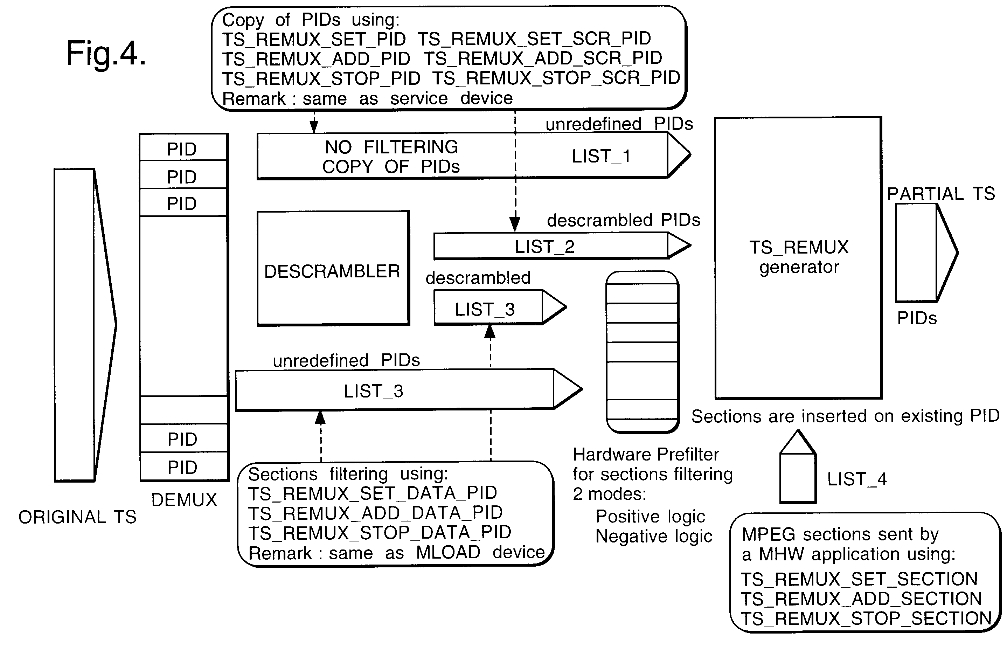

A first signal processing device which remultiplexes a demultiplexed received transport stream to produce an output partial transport stream, typically containing some but not all of the information in the original transport stream, and possibly additional information will now be described, with reference to Fig. 4. For ease of reference, the device will be referred to below as a TS_REMUX device (abbreviation for Transport Stream RE-MUltipleXer).

### TS_ REMUX DEVICE

The Ts_Remux device can be considered as comprising a number of functional units, hereinafter termed commands. In addition, as will be appreciated, the device contains underlying functionality for actually implementing the functions performed by the various commands. For example, actual selection of packets from the received data stream may be implemented by means of dedicated hardware which filters the data to extract packets corresponding to defined packet identifiers, the list of packet identifers being supplied under software control based on information supplied by an application via one of the commands described below. In the following discussion,it should be noted that upper and lower case versions of a command name are both intended to refer to the same command.

The precise details of the implementation of the various functions, and the distribution between hardware and software are a matter of choice for the implementor and will not be described in detail. It is, however, noted that dedicated integrated circuits capable of performing filtering operations on an MPEG data stream are commercially available, and these can be used as the basis for a hardware accelerator, or more preferably modified to produce a dedicated hardware accelerator, to implement various of the packet selecting operations required, thereby reducing the processing power required to run the software. However, the operations required may be implemented in software if sufficient processing power is available.

The device is arranged to operate in one of two modes, an idle mode in which no output is being produced and a running mode in which data is being conveyed to the output data stream. In the running mode, as will be appreciated, more system resources are required by the device. The operation of the commands described below may be dependent on the mode of operation, and, in particular, most commands will only operate in only one mode, and return an error if accessed in the other mode.

Each command interfaces with an application under the control of the device manager 4068 by means of one of the three standard procedures mentioned above, which are common to other devices. Information may be passed between an application and the device by means of parameter tables. For ease of reference, the three basic procedures are summarised briefly below:-
1) Device: Call. This command can be used by an application for performing synchronous commands or data transfer. Execution of the application is suspended until control is returned when the operation by the device driver has completed; this allows operations which must be performed in strict sequence to be controlled reliably.
2) Device: I/O. This command allows asynchronous operation. That is, an application can send a request for a data transfer or a particular function to be performed by the device driver and execution of the application can continue while the data transfer or function is performed by the device driver.
3) Device: Event. The event trapping function enables events to be signalled by the device to an application, and for particular action to be taken by the application in response to the event independently of the code the application is executing at the time the event is signalled; effectively the application is interupted. Events may be prioritised. Events may be used to signal events occuring on the interface, such as a bus reset, or to provide monitoring of asynchronous commands, for example by signalling completion of a requested data transfer.

The commands provided in a device embodying the invention will now be described. Each command may be accessed by an application by passing an identifier of the command as a parameter via one of the above three standard procedures. Not all of the commands described below need be provided, and the functions of the commands may be altered. Although the commands may be independently provided or altered, as will be appreciated, certain synergistic benefits accrue from the combined functionality provided by the commands described.

The commands will be described in terms of the features and functions provided by each command, together with optional and preferable features. With the information given and specifications provided, actual implementation of these features should be straightforward for one skilled in the art, and the precise details are left to the implementor. As an example, each command could be implemented in software, preferably written in the C programming language and preferably compiled to run on the processor used to run the application; however the device driver may be run on a separate processor, and some or all commands may be implemented by dedicated hardware. The Call and IO commands may signal information or pass parameters back to an application by setting values in a parameter table stored in memory whose address is passed to the device.

### Command: TS₋REMUX_SET_PID

This command operates only in the idle mode and is arranged to receive an initial list of packet identifiers (PIDs), each with an associated priority value (preferably a single byte encoding a priority from 0 to 255) to be copied from the input data stream to the output data stream. The command is preferably accessed synchronously by means of the Device: Call procedure. In the event of the device receiving more packets to copy than can be handled by the output stream, the packets whose priority values are lowest are dropped first.

### Command: TS_{_}REMUX_{_}SET_{_}SCR_{_}PID

This command operates similarly to the Set_PID command described above, and is used to specify packet identifiers of packets to be descrambled before inclusion in the output data stream. In addition to a list of packet identifiers and priorities, the command receives information necessary for descrambling the packets. This information may include a mode indicator specifying the type of processing to be performed on each packet, session and index numbers, an operator reference, the PID of the packet to be descrambled and the PID of the packet containing the ECM to use in descrambling.

### Command: TS_REMUX_SET_DATA_PID

This command operates similarly to the Set_PID command described above, and is used to specify packet identifiers of MPEG sections from the application to be included in the output data stream.

### Command: TS_REMUX_SET_SECTION

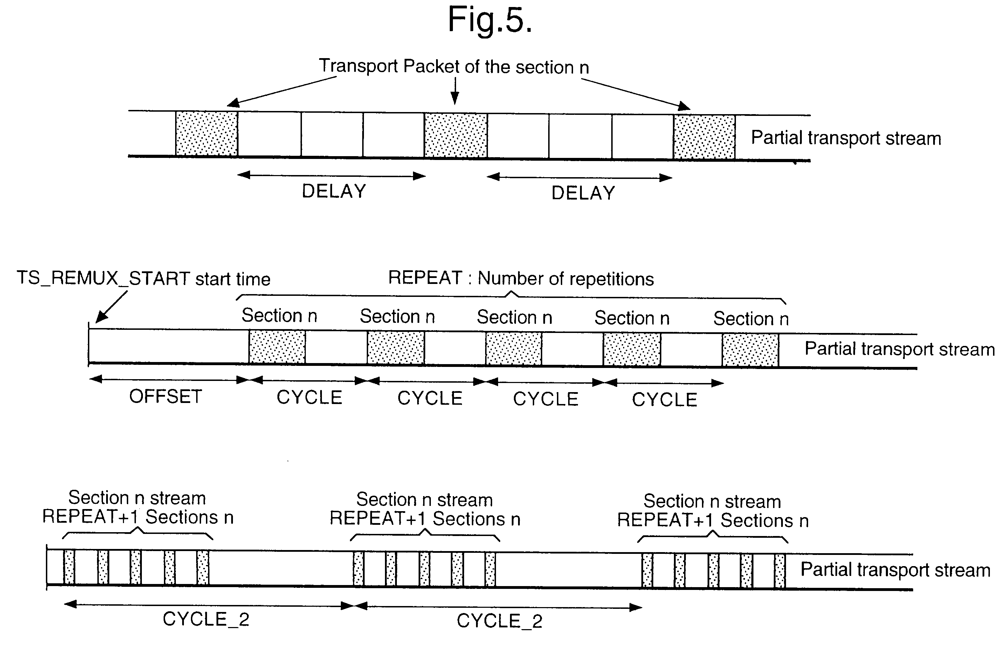

This command operates similarly to the Set_PID command described above, and is used to specify packet identifiers of MPEG sections to be included in the output data stream. In addition, the application can specify a number of parameters including an OFFSET specifying a delay from the start of running mode, a REPEAT parameter specifying the number of times a section is to be repeated, a DELAY between packets of the section, a CYCLE parameter specifying the time from the start of one section to the next repetition of the section and a CYCLE_2 parameter specifying the time from the start of one series of repetitions to the start of the next series of repetitions. The function of these parameters will be understood better with reference to Fig. 5.

### Command: TS_REMUX_ADD_PID

As mentioned above, the Set_PID command only operates in idle mode. In running mode, the Add_PID command enables an application to add PIDs to the current list of PIDs specified for copying to the output stream. The device includes a complementary command Ts_Remux_Stop_PID, which deletes PIDs from the current list. The PIDs are preferably specified in the same manner as for the Set_PID command, including a priority for each command. Because the editing of PIDs in a list may require some time for the list to be updated when the device is in running mode, these commands are preferably accessed asynchronously via the Device: I/O procedure.

In addition, analogous procedures are provided for dynamically adding to or deleting from the lists of packets to be descrambled, sections to be copied, or sections to be inserted, by means of Ts_Remux_{Add;Stop}_(SCR_PID;Data_PID;Section} commands.

For switching from idle mode to running mode, the command Ts_Remux_Start is provided, and for switching from running mode back to idle mode, command Ts_Remux_Stop is provided. Both of these commands are preferably accessed asynchronously via the Device: I/O procedure.

In addition, for returning information concerning the PIDs, the encrypted PIDs and the sections included in the current output stream, the commands Ts_Remux_PID_Info, Ts_Remux_ECM_Info and Ts_Remux_Info_Section are provided. These return a list of current PIDs in similar format to that supplied by an application using the correpsonding Set or Add commands.

In addition to the commands, which allow an application to send commands to the device, the device is arranged to signal certain events to an application, via the device manager's event handling functions. The device implements the following events:

### Event: EV_TS_REMUX_ECM

This event is used to signal rejection of an ECM by the RSM. The device passes the PID of a packet where the ECM was found and the address of a buffer storing the rejected ECM, together with status words.

### Event: EV_TS_REMUX_GETALL

This event is used to signal the response of the RSM to an application when an ECM is sent to the RSM.

### Event: EV_TS_REMUX_BAD_NB

This event signals reception of an ECM with an unexpected session or index number; the ECM is not sent to the RSM.

### Event: EV_TS_REMUX_STREAM

This event is used to signal a change in stream composition, when the priority associated with a PID has been used to control skipping or adding of PIDs in the output stream.

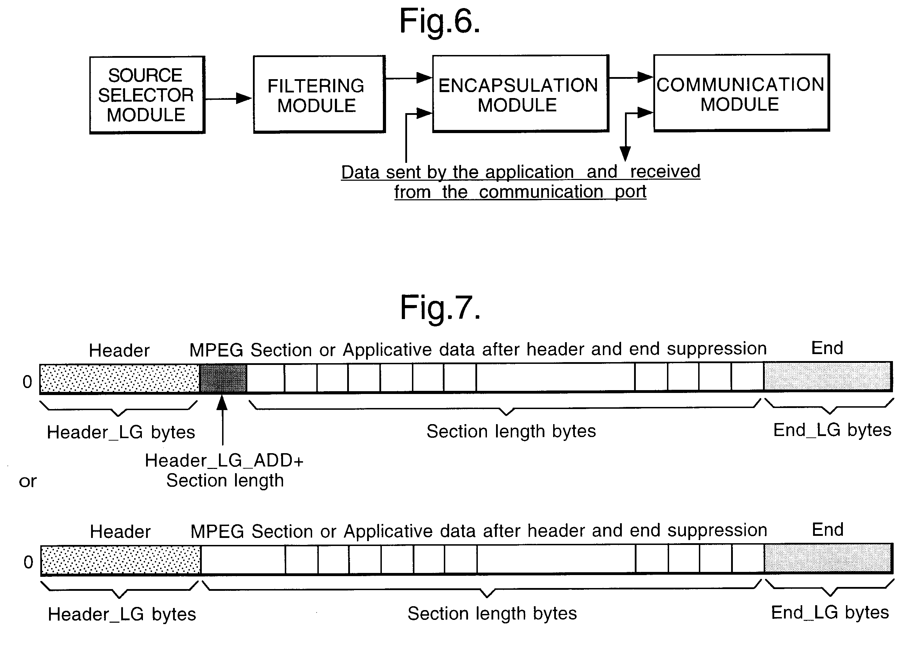

A second device embodying the invention will now be described, with reference to Figs. 6 and 7. This device will be referred to as MCOM (abbreviation for MPEG Communications), and is primarily intended to encapsulate received MPEG sections to provide a virtual TCP/IP data source from a satellite link.

### MCOM DEVICE

This device, like the TS_REMUX device, is composed of a number of commands. Many of the commands perform analogous functions to commands of the TS_REMUX device, so will not be described in detail. Like the TS_REMUX device, the MCOM device preferably operates in either a running mode or an idle mode and has commands for switching between modes. In place of commands for adding and deleting packets from the output data stream, the MCOM device comprises commands for selecting sections to be included, for deleting portions of sections (or, viewed another way, extracting portions of sections to be included) and for altering parameters of the header (if present), footer (if present), and data checking (if present) to be added to received sections (or the portion thereof to be included in the output data stream). The device provides flexibility, by allowing any of a number of communication protocols to be simulated with minimal interaction required by an application during running.

The device may be able to operate in an automatic mode, in which, after defining filtering to be performed on the received data, sections are automatically queued to the output until all expected sections have been received. Alternatively, the device may operate in a manual mode in which each section is transferred under the control of the application.

Description of the MCOM device will concentrate on commands which are significantly different from those featured in the TS_REMUX device.

### Command: MCOM_ INIT_COMM

This command is used to configure the communication port, and is CALLed with a buffer containing a port type identifier and specific data for that port. This command is useful because it enables the MCOM device to operate with a variety of communication ports (for example serial, parallel, IEEE 1394) without requiring port-specific information to be used with other commands in the device.

### Command: MCOM_INIT_FILTER

This command is CALLed to define a numeric field of **n** bits long starting **m** bits from the beginning of an MPEG section at which a section identifier should be found.

The field defined can contain a numeric value **c** of from 0 to (2^**n** - 1).

Following this command, a bitmap of 2^n bits is defined in memory, each bit corresponding to a section to receive. For example, if n=8, a bitmap of 256 bits (32 bytes) is defined, to flag receipt of 256 separate sections. During receipt of sections from the demultiplexer, the numeric value **c** of this field is extracted and the (**c** - 1)th bit of the bitmap is tested; if the bit is set, the section is rejected. Thus automatic filtering of sections can be performed, in which a set bit can be used to signify that a section has already been received, or that no corresponding section is to be expected. Of course, the bit may be reset, or receipt of sections flagged in a different way.

The command allows the initial bitmap to be defined; all bits may be set or reset, or a specified bitmap may be set as the initial bitmap.

Corresponding commands are provided for changing the filter dynamically, for example in running mode, or for interrogating the current state of the filter.

The bitmap (or other flag table) may be used to control automatic queueing of packets until all expected sections have been received.

This command is useful in allowing considerable flexibility over the format of MPEG sections that can be processed by the device with automatic filtering.

### Command: MCOM_PACKET_DEL

This command is CALLed to define portions of an MPEG section to be removed as part of the encapsulation process. For example, a start offset **p** and an end offset **q** may be defined, and the MPEG section "top and tailed" by removing **p** bytes from the start and **q** bytes from the end.

This command and associated functionality enables the important data to be communicated to be freely placed in the middle of an MPEG section.

### Command: MCOM_PACKET_HEADER

This command enables a header of a defined format to be added to a received section; the header may include information conforming to a particular communication protocol, for example TCP/IP. This command may operate in one of two modes, a USE_HEADER mode in which only the header is added, and a USE_LG_HEADER mode in which the command also adds information concerning the length of the encapsulated packet, for example a defined additive constant plus the length of the section, as illustrated in Fig. 7.

In a similar manner, the device includes a command for adding a frame check sequence, for example a CRC (cyclic redundancy check) of 16 or 32 bits or an LRC on a defined section of the packet, for example starting after a start offset number of bytes and continuing until an end offset number of bytes from the end, with the calculated value inserted immediately after the section checked.

The device may also include a command for translating characters, for example a list of characters to be "escaped" (i.e. substituted by a pair of characters comprising a defied escape character and a defined value).

The above commands and events are merely illustrative, and the invention may be implemented in a variety of ways, and, in particular, some commands may be combined with others which perform similar functions, or some may be omitted in simplified implementations. Hardware and software implementations of each of the functions may be freely mixed, both between commands and within a single command.

It will be readily understood that the functions performed by the hardware, the computer software, and such like are performed on or using electrical and like signals. Software implementations may be stored in ROM or FLASH, or may be patched in FLASH.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. Apparatus for processing a digital data stream comprising:
means for receiving a digital data stream comprising a plurality of packets of information;
means for storing a list of specified packets to be selected from the received digital data stream;
means for extracting packets or sections specified in said list from the received data stream; and
means for combining or processing the extracted packets or sections to produce an output data stream.

2. Apparatus according to Claim 1, wherein the combining means is arranged to produce an output data stream adapted for storage on a digital video recorder.

3. Apparatus according to Claim 1, wherein the encapsulating means is arranged to produce an output data stream adapted for data communication with a computer.

4. Apparatus according to any preceding claim, wherein the received digital data stream is an MPEG data stream, the list comprising a list of packet identifiers or a list of sections to be selected from the received data stream.

5. Apparatus according to any preceding claim, wherein the list includes priority information indicating priority assigned to each packet, the apparatus being arranged to include packets with higher priority in the output stream in preference to packets with lower priority in the event of the number of packets to be combined becoming too great for the data handling capacity of the output stream.

6. Apparatus according to any preceding claim including means for storing at least one further list of packet identifiers and means for applying one or more specified processing operations to packets specified in the or each further list prior to inclusion in the output data stream.

7. Apparatus according to any preceding claim including means for inserting further packets or sections into the output data stream.

8. Apparatus according to any preceding claim wherein the means for porcessing the extracted sections is arranged to perform at least one of: cutting a header and/or footer from a received data section; adding a header and/or footer to a received data section; adding an indication of the length of a received section; and adding a frame check sequence.

9. Apparatus according to any preceding claim including means for monitoring receipt of sections.

10. Apparatus according to Claim 9 having means for automatically queueing the data packets produced by processing received sections for transmission until said monitoring means indicates that all expected sections have been received or until receipt of an instruction to stop from an application.

11. Apparatus according to any preceding claim in the form of a device in a receiver/decoder, arranged to operate under the control of an application, via a device manager.

12. A device for operating under the control of an application to process a received digital data stream to produce an output stream therefrom, the device comprising:
means for receiving a digital data stream comprising a plurality of packets of information;
means for receiving from an application information for compiling a list of specified packets or sections to be selected from the received digital data stream;
means for extracting packets or sections specified in said list from the received data stream; and
means for combining or processing the extracted packets or sections to produce said output data stream.

13. A device according to Claim 12 arranged to operate in one of two modes, the modes comprising an idle mode in which no output stream is being produced and a running mode in which data is passing through the device.

14. A device according to Claim 13 including means for receiving commands from an application for switching between said modes.

15. A device according to Claim 13 or Claim 14 including means operative in said idle mode to receive information for compiling said list in the form of an initial list of packet identifiers to be copied to the output stream.

16. A device according to Claim 13, 14 or 15 including means operative in said running mode to receive a list of packet identifiers to be added to or deleted from the current list.

17. A device according to any of Claims 11 to 16 further comprising means arranged to maintain a further list of packets to be descrambled.

18. A device according to Claim 17 arranged to receive information for use in descrambling from an application, preferably as part of a procedure for setting the initial list of packets to be descrambled.

19. A device according to any of Claims 11 to 18 further comprising means for storing a list of MPEG sections to be inserted by an application.

20. A device according to Claim 19 arranged to receive parameters from an application for controlling repetition of the section in the output stream, the device being arranged to repeat the section based on the parameters.

21. A device according to any of Claims 11 to 20 further comprising means for returning to an application information concerning the currently selected packet identifiers or sections included in the output stream.

22. A data processing system comprising:
run-time engine means for running at least one application;
means for receiving a broadcast digital data stream;
a device according to any of Claims 11 to 21 for processing the received digital data stream under the control of the or each application;
means for supplying the data stream output by the device to an output interface.

23. A data processing system according to Claim 22 implemented in a receiver/decoder, the receiver/decoder including means for receiving the broadcast digital data stream from a satellite receiver or cable and said interface, the interface being arranged for connection to a digital video recorder or digital display device or computer for display or storage of at least a portion of the received data or to provide a communication link to the computer.

24. A receiver/decoder according to Claim 23, wherein the device is arranged to co-operate with a device driver for outputting the output data stream to the interface.

25. A receiver/decoder according to Claim 24 wherein the interface conforms to the IEEE 1394 standard or a variant or modification thereof.

26. A receiver/decoder according to any of Claims 24 to 25 arranged for connection to a digital video recorder, the receiver/decoder including an application arranged to control the device to select portions of the received data stream comprising two or more television programmes for outputting to the digital video recorder and means for adding information to the output data stream identifying the programmes.

27. An application for a receiver/decoder having means for receiving a broadcast digital data stream, an interface for connection to a digital storage medium, and a device for processing the received digital data stream to produce an output data stream for supply to the digital storage medium, the application comprising means for controlling said device to select portions of the received digital data stream corresponding to two or more broadcast programmes and for outputting the portions to the digital storage medium for storage in a form enabling the programmes to be played back subsequently.

28. A receiver/decoder incorporating a device substantially as herein described.

29. A device substantially as herein described.
